# EUROPÄISCHE PATENTANMELDUNG

(11) **EP 1 052 429 A2**
(43) Veröffentlichungstag der Anmeldung: **15.11.2000**
(21) Anmeldenummer: 00109201.4
(22) Anmeldetag: 28.04.2000
(51) Int. Cl.: F16H 37/02

(54) **Stufenlos verstellbares Getriebe, insbesondere für ein Kraftfahrzeug**

(30) Priorität: 14.05.1999 DE 19922410
(71) Anmelder: Volkswagen Aktiengesellschaft, 38436 Wolfsburg (DE)
(72) Erfinder: Adamis, Panagiotis, Prof., 38442 Wolfsburg (DE); Hofmann, Lars, Dipl.-Ing., 04600 Altenburg (DE); Petersen, Rainer, Dipl.-Ing., 38444 Wolfsburg (DE); Alt, Wilfried, 38162 Cremlingen (DE); Janz, Winfried, Dipl.-Ing., 38444 Wolfsburg (DE); Scholz, Romanus, Dipl.-Ing., 38448 Wolfsburg (DE)

(57) **Zusammenfassung**

Das stufenlos verstellbare Getriebe, das insbesondere für ein Kraftfahrzeug vorgesehen ist, weist eine Anfahrkupplung (3), einen Variator (2) und ein Umschaltgetriebe (4) auf und steht mit einem Antriebsmotor in Verbindung. Der Variator (2) ist als Reibgetriebe mit stufenlos verstellbarem Übersetzungsverhältnis ausgebildet. Die Anfahrkupplung (3) ist in Kraftflußrichtung nach dem Variator (2) und vor dem Umschaltgetriebe (4) angeordnet, wobei der Variator (2) fest mit dem Antriebsmotor gekoppelt ist.

## Beschreibung

Die Erfindung betrifft ein stufenlos verstellbares Getriebe, insbesondere für ein Kraftfahrzeug, mit einer Anfahrkupplung, einem Variator und einem Umschaltgetriebe, wobei das Getriebe mit einem Antriebsmotor in Verbindung steht und der Variator als Reibgetriebe mit stufenlos verstellbarem Übersetzungsverhältnis ausgebildet ist.

Stufenlos verstellbare Getriebe werden in unterschiedlicher Ausbildung und Anordnung in weiten Anwendungsgebieten der Technik eingesetzt. Bekannte Ausbildungsformen sind das Kegelscheibenumschlingungsgetriebe, das Kegelscheibenreibgetriebe und das Toroidgetriebe. Speziell die Ausbildung als Kegelscheibenumschlingungsgetriebe wird seit langem auch in Kraftfahrzeugen verwendet, beispielsweise in Form der bekannten DAF-Variomatic, bei der das Übersetzungsverhältnis über einen Fliehkraftmechanismus drehzahlabhängig steuerbar ausgebildet ist.

Aus der DE 196 41 949 A1 ist ein stufenlos verstellbares Getriebe mit einer Anfahrkupplung, mit einem als Kegelscheibenumschlingungsgetriebe ausgebildeten Variator mit zwei Kegelscheibenpaaren und einer Anpreß- und Stelleinrichtung und mit einem Übersetzungsgetriebe bekannt. Das Getriebe weist einen Trockenraum für die Anfahrkupplung, einen weiteren Trockenraum für die Kegelscheibenpaare und einen Ölraum für die Anpreß- und Stelleinrichtung, das Übersetzungsgetriebe und ggf. ein Differential auf. Die Anpreß- und Stelleinrichtung ist derart ausgebildet und angeordnet, daß die beiden Kegelscheibenpaare von einer gemeinsamen Seite aus ansteuerbar sind. Dadurch ergibt sich ein einfacher und platzsparender Aufbau des Getriebes.

In den Technical Notes der JSAE Review 17 von 1996 wird auf den Seiten 197 bis 199 das gattungsbildende stufenlos verstellbare Getriebe der Fa. Aichi vorgestellt, das eine Anfahrkupplung, ein Umschaltgetriebe und einen Variator umfaßt. Die Anfahrkupplung ist als Pulverkupplung ausgebildet und steht einerseits mit dem Antriebsmotor und andererseits mit dem Umschaltgetriebe in Verbindung, das zur Umschaltung von Vorwärts- auf Rückwärtsfahrt vorgesehen ist. Dem Umschaltgetriebe nachgeschaltet ist der Variator angeordnet, der als Kegelscheibenumschlingungsgetriebe ausgebildet ist. Parallel zu dem Variator ist ein Bypassgetriebe mit einer festen Anfahrübersetzung angeordnet, das durch eine Zwei-Wege-Freilaufkupplung ein- und auskuppelbar ist. Da der Variator nach einem starken Bremsvorgang, z.B. einer Notbremsung, nicht oder nur schwer in eine Anfahrübersetzung bringbar ist, wäre ein Anfahren ohne das Bypassgetriebe nicht oder nur stark eingeschränkt möglich. In einem solchen Fall ist das Bypassgetriebe durch ein selbsttätiges Schließen der Zwei-Wege-Freilaufkupplung aktivierbar, so daß das Anfahren dann möglich ist. Durch eine Wirksamkeit der Zwei-Wege-Freilauf kupplung in beide Drehrichtungen kann das Anfahren in beide Fahrtrichtungen, d.h. vorwärts und rückwärts, erfolgen. Der betriebene Aufwand zur Ermöglichung des Anfahrens ist jedoch beträchtlich. Im übrigen bewirken Reibungsverluste in der Zwei-Wege-Freilaufkupplung eine Wirkungsgradverschlechterung des Getriebes.

Daraus ergibt sich das Problem, ein einschließlich einer Anfahrfähigkeit nach einer Notbremsung voll funktionstüchtiges stufenlos verstellbares Getriebe mit verbessertem Wirkungsgrad zur Verfügung zu stellen.

Das Problem wird durch die Merkmale des Anspruches 1 gelöst.

Vorteilhafte Ausgestaltungen ergeben sich aus den Unteransprüchen.

Das stufenlos verstellbare Getriebe, das insbesondere für ein Kraftfahrzeug vorgesehen ist, weist eine Anfahrkupplung, einen Variator und ein Umschaltgetriebe auf und steht mit einem Antriebsmotor in Verbindung. Der Variator ist als Reibgetriebe mit stufenlos verstellbarem Übersetzungsverhältnis ausgebildet. Die Anfahrkupplung ist in Kraftflußrichtung nach dem Variator und vor dem Umschaltgetriebe angeordnet, wobei der Variator fest mit dem Antriebsmotor gekoppelt ist.

Durch die Anordnung der Anfahrkupplung nach dem Variator und die Koppelung des Variators mit dem Antriebsmotor ist sichergestellt, daß der Variator immer angetrieben wird, solange der Antriebsmotor in Betrieb ist. Dies bewirkt, daß das Übersetzungsverhältnis des als Reibgetriebe ausgebildeten Variators in allen Betriebssituationen mit Hilfe kleiner Stellkräfte veränderbar ist. Das ist insbesondere bei einer Notbremsung von Bedeutung, bei der die Anfahrkupplung geöffnet wird, um den Antriebsmotor von einem restlichen Antriebsstrang, der mit antreibbaren Rädern in Verbindung steht, zu trennen. Für ein nachfolgendes Wiederanfahren ist dann eine möglichst schnelle Änderung des Übersetzungsverhältnisses von einer zunächst eingestellten Schnellfahrübersetzung in eine Anfahrübersetzung erforderlich. Durch die Anordnung der Anfahrkupplung vor dem Umschaltgetriebe wird bei geöffneter Anfahrkupplung nur der Variator, nicht aber das Umschaltgetriebe von dem Antriebsmotor angetrieben. Der Variator wird unabhängig von der Fahrtrichtung des Kraftfahrzeuges immer in gleicher Drehrichtung angetrieben, was zu einer konstruktiven Vereinfachung und zu geringerem Verschleiß führt. Das erfindungsgemäße Getriebe ist wegen der Anordnung der Anfahrkupplung in jedem Betriebszustand des Kraftfahrzeuges voll funktionstüchtig und weist aufgrund der kleinen erforderlichen Stellkräfte, die über Hilfsenergie erzeugbar sind, einen hohen Gesamtwirkungsgrad auf.

Der Variator kann eine steuerbare Anpreßeinrichtung und eine Vorrichtung zur Übersetzungsverstellung aufweisen. Die Anpreßeinrichtung und die Vorrichtung zur Übersetzungsverstellung können dann unabhängig voneinander steuerbar ausgebildet und angeordnet sein. Durch die Anpreßeinrichtung sind Anpreßkräfte erzeugbar, die zur Übertragung eines Drehmomentes über Reibkräfte in einem Reibgetriebe prinzipiell erforderlich sind. Im Gegensatz zu einer denkbaren nicht steuerbaren Anpreßeinrichtung mit weitgehend konstanten Anpreßkräften ermöglicht die steuerbar ausgebildete Anpreßeinrichtung eine Anpassung der Anpreßkräfte an das momentan übertragene Drehmoment und die aktuelle Übersetzung. Dadurch wird der Verschleiß von Reibflächen und Lagern verringert und der Wirkungsgrad des Getriebes erhöht. Durch die Vorrichtung zur Übersetzungsverstellung ist das Übersetzungsverhältnis je nach Ausbildung des Variators auf unterschiedliche Weise stufenlos änderbar. Durch die unabhängige Gestaltung der Anpreßeinrichtung und der Vorrichtung zur Übersetzungsverstellung sind die jeweiligen Stellkräfte genauer dosierbar, so daß eine Unteranpressung und eine Überanpressung, die jeweils einen erhöhten Verschleiß und einen verschlechterten Wirkungsgrad zur Folge hätte, in Verbindung mit einer geringeren Anpreßreserve vermieden werden. Insgesamt ergibt sich dadurch ein besserer Wirkungsgrad des Getriebes.

Die Anpreßeinrichtung des Variators kann im wesentlichen drehmoment- und / oder übersetzungsabhängig und die Vorrichtung zur Übersetzungsverstellung im wesentlichen drehzahlabhängig steuerbar ausgebildet sein. Das vom Getriebe zu übertragende Drehmoment wird im Variator durch Reibkräfte übertragen. Das jeweilige Drehmoment ergibt sich aus einem wirksamen Durchmesser bzw. Radius, an dem die Reibkräfte angreifen. Da die Reibkräfte über die Anpreßkräfte erzeugt werden, ist eine drehmoment- und / oder übersetzungsproportionale Anpressung zur Vermeidung von Unter- und Überanpressung vorteilhaft. Mit zunehmender Drehzahl des Antriebsmotors sollte abgesehen von einigen Sonderfällen das Übersetzungsverhältnis des Variators vergrößert werden, um einerseits ein Hochdrehen des Antriebsmotors zu vermeiden und andererseits einem dafür ursächlichen Beschleunigungskommando eines Fahrers zu entsprechen. Eine weitgehend drehzahabhängige Steuerung des Übersetzungsverhältnisses ist daher sinnvoll.

Der Variator kann als Kegelscheibenumschlingungsgetriebe ausgebildet sein und weist dann bevorzugt ein Antriebsscheibenpaar, ein Abtriebsscheibenpaar und ein mit diesen in Verbindung stehendes Zugmittel auf, wobei diese Bauteile in einem geschlossenen Variatorraum angeordnet sein können. Das Kegelscheibenumschlingungsgetriebe ist im Vergleich zu anderen Bauformen stufenlos verstellbarer Teilgetriebe einfach aufgebaut, erfordert aufgrund einer Umschlingung der beiden Scheibenpaare durch das Zugmittel und einer damit verbunden großen Kontaktfläche bzw. Reibfläche relativ kleine Anpreßkräfte, und ist aufgrund einfacher geometrischer Zusammenhänge einfach steuerbar. Durch die Anordnung der Bauteile in dem geschlossenen Variatorraum wird eine Beeinträchtigung der Traktion zwischen den Scheibenpaaren und dem Zugmittel, beispielsweise durch eindringendes Öl oder Schmutz, vermieden und somit neben einer Sicherung der Funktion auch die Lebensdauer des Variators erhöht.

Die Anfahrkupplung kann automatisiert betätigbar ausgebildet sein. Dazu kann eine Kupplungsbetätigungsvorrichtung vorgesehen sein, die im wesentlichen drehzahlabhängig steuerbar ausgebildet ist. Durch eine Automatisierung kann bewirkt werden, daß die Anfahrkupplung nur bei Bedarf, z.B. zum Anfahren und zur Vermeidung eines Abwürgens des Antriebsmotors, ganz oder teilweise geöffnet wird. Dadurch wäre dann sichergestellt, daß im normalen Fahrbetrieb in der Anfahrkupplung kein Schlupf auftritt, was den Wirkungsgrad des Getriebes verbessert.

Die Anfahrkupplung kann als Trockenkupplung ausgebildet sein. Dies hat bei entsprechender Ausbildung, d.h. bei Verwendung einer Anpreßfeder, den Vorteil, daß zur Kraftübertragung keine Hilfsenergie erforderlich ist. Nur zur Betätigung der Anfahrkupplung, d.h. zum Öffnen, ist eine Kraft bzw. die entsprechende Hilfsenergie zur Erzeugung der Kraft nötig.

Die Anfahrkupplung kann jedoch auch als Naßkupplung, beispielsweise als Lamellenkupplung, ausgebildet sein. Die Naßkupplung erfordert im Vergleich zu der Trockenkupplung einen geringeren Bauraum. Zur Kraftübertragung ist in der Regel zwar Hilfsenergie erforderlich. Jedoch ist die Naßkupplung über eine zugeordnete Steuerung relativ fein dosiert steuerbar.

Das Umschaltgetriebe kann eine Vorwärts- und eine Rückwärtsschaltvorrichtung aufweisen, wobei die Vorwärts- und die Rückwärtsschaltvorrichtung derart miteinander gekoppelt sein können, daß jeweils nur eine der beiden Schaltvorrichtungen einrückbar ist. Das Umschaltgetriebe dient zur Umschaltung zwischen Vorwärts- und Rückwärtsfahrt. Die Koppelung der Vorwärts- und Rückwärtsschaltvorrichtung dient der Betriebssicherheit. Durch die Koppelung ist ausgeschlossen, daß ein zugeordnetes Vorwärtsgangrad und ein entsprechendes Rückwärtsgangrad gleichzeitig einrückbar sind. Bei gleichzeitigem Einrücken beider Gangräder würde der Antriebsstrang blockiert.

Die Vorwärts- und die Rückwärtsschaltvorrichtung können jedoch auch mit Absicht getrennt voneinander betreibbar ausgebildet und angeordnet sein. Es kann dann eine Fahrtsicherung vorgesehen sein. In diesem Fall wäre bei gleichzeitigem Einrücken beider Schaltvorrichtungen eine Parksperrenfunktion gegeben. Aus Sicherheitsgründen sollte dann jedoch die Fahrtsicherung Verwendung finden, durch die sichergestellt wird, daß das gleichzeitige Einrücken beider Schaltvorrichtungen nur bei stehendem Fahrzeug möglich ist.

Im folgenden werden Aufbau und Funktionsweise des erfindungsgemäßen stufenlos verstellbaren Getriebes weiter erläutert. Hierzu zeigen:
- Figur 1: einen Schnitt A-A des Getriebes gemäß Figur 2 und
- Figur 2: eine Seitenansicht des Getriebes.

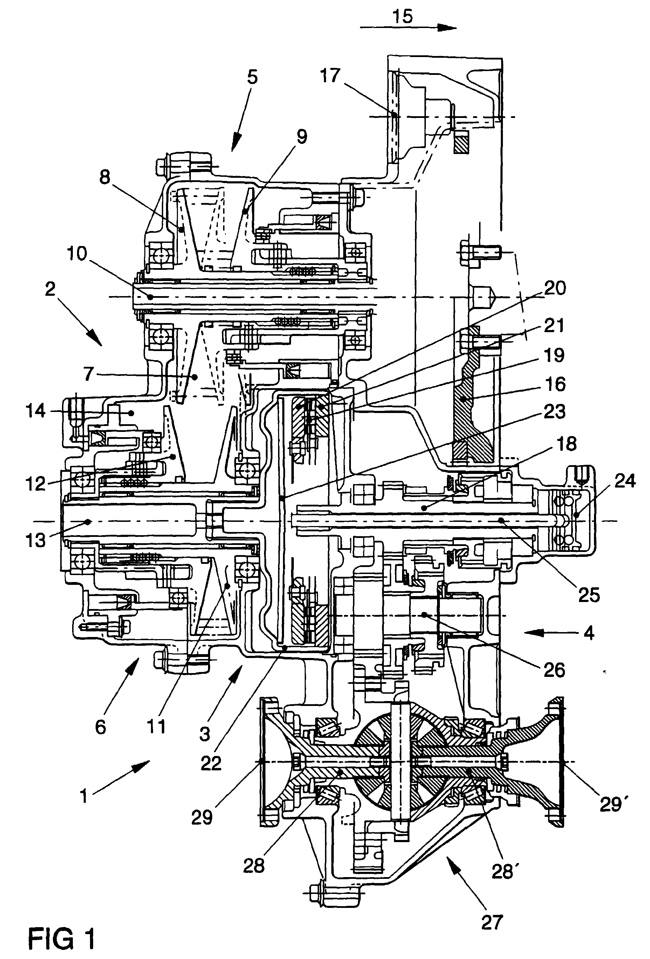

Das in der Figur 1 dargestellte stufenlos verstellbare Getriebe 1 umfaßt einen Variator 2, eine Anfahrkupplung 3 und ein Umschaltgetriebe 4.

Der Variator 2 ist als Kegelscheibenumschlingungsgetriebe ausgebildet und weist ein Antriebsscheibenpaar 5, ein Abtriebescheibenpaar 6 und ein beide Scheibenpaare 5, 6 verbindendes Zugmittel 7 auf. Das Antriebsscheibenpaar 5 wird aus einer antriebsseitigen Festscheibe 8 und einer antriebsseitigen Losscheibe 9 gebildet. Während die antriebsseitige Festscheibe 8 fest mit einer Variatorantriebswelle 10 in Verbindung steht, ist die antriebsseitige Losscheibe 9 axial verschiebbar und drehfest auf der Variatorantriebswelle 10 gelagert. In gleicher Weise sind eine abtriebsseitige Festscheibe 11 und eine abtriebsseitige Losscheibe 12, die das Abtriebsscheibenpaar 6 bilden, auf einer Variatorabtriebswelle 13 angeordnet. Das Antriebsscheibenpaar 5, das Abtriebsscheibenpaar 6 und das Zugmittel 7 befinden sich in einem geschlossenen Variatorraum 14. An einer Motorseite 15 ist der Variator 2 über die Variatorantriebswelle 10 mit einem zugeordneten Antriebsmotor gekoppelt, von dem in der Figur nur eine Schwungscheibe 16 und ein dieser zugeordneter Anlasserflansch 17 des Getriebes 1 erkennbar dargestellt sind.

Der Variator 2 steht über die mit der Variatorabtriebswelle 13 und eine Getriebeantriebswelle 18 verbundene Anfahrkupplung 3 mit dem Umschaltgetriebe 4 in Verbindung. Die Anfahrkupplung 3 ist als Trockenkupplung ausgebildet und weist eine Mitnehmerscheibe 19, eine Druckplatte 20, eine Gegendruckplatte 21, ein Kupplungsgehäuse 22 und eine Anpreßfeder 23 auf. Das Kupplungsgehäuse 22 ist einerseits fest mit der Variatorabtriebswelle 13 und andererseits mit der Gegendruckplatte 21 verbunden. Die Druckplatte 20 ist in dem Kupplungsgehäuse 22 drehfest und axial verschiebbar gelagert. Die Mitnehmerscheibe 19, die zwischen der Druckplatte 20 und der Gegendruckplatte 21 angeordnet ist, steht drehfest und axial verschiebbar mit der Getriebeantriebswelle 18 in Verbindung. Durch eine durch die Anpreßfeder 23 erzeugbare und in Richtung der Motorseite 15 wirksame Anpreßkraft ist die Anfahrkupplung 3 im Normalzustand geschlossen. Über eine in der hohl ausgebildeten Getriebeantriebswelle 18 angeordnete und über ein hydraulisch ausgebildetes Kupplungsstellglied 24 betätigbare Stoßstange 25 kann die Anfahrkupplung 3 geöffnet werden, indem die Stoßstange 24 in Richtung auf den Variator 2 auf die Anpreßfeder 23 einwirkt.

Das Umschaltgetriebe 4, das zur Umschaltung von Vorwärts- auf Rückwärtsfahrt vorgesehen ist, steht über eine zugeordnete Getriebeabtriebswelle 26 mit einem Ausgleichsgetriebe 27 in Verbindung. Das Ausgleichsgetriebe 27 weist zwei Halbwellen 28, 28' mit Abtriebsflanschen 29, 29', an denen Antriebswellen befestigt werden können.

Die Anordnung der Anfahrkupplung 3 nach dem Variator 2 und die Koppelung des Variators 2 mit dem Antriebsmotor bewirkt, daß der Variator 2 immer angetrieben wird, solange der Antriebsmotor in Betrieb ist. Das hat zur Folge, daß eine Änderung des Übersetzungsverhältnisses des Variators in allen Betriebssituationen mittels kleiner Stellkräfte erzeugbar ist. Das ist insbesondere bei einer Notbremsung von Bedeutung, bei der die Anfahrkupplung 3 geöffnet wird, um den Antriebsmotor von einem restlichen Antriebsstrang, der mit antreibbaren Rädern in Verbindung steht, zu trennen. Für ein nachfolgendes Wiederanfahren ist dann eine möglichst schnelle Änderung des Übersetzungsverhältnisses von einer zunächst eingestellten Schnellfahrübersetzung in eine Anfahrübersetzung erforderlich. Durch die Anordnung der Anfahrkupplung 3 vor dem Umschaltgetriebe 4 wird bei geöffneter Anfahrkupplung 3 nur der Variator 2, nicht aber das Umschaltgetriebe 4 von dem Antriebsmotor angetrieben, was den Wirkungsgrad des Getriebes 1 verbessert. Des weiteren bewirkt diese Anordnung, daß der Variator 2 unabhängig von der Fahrtrichtung eines zugeordneten Kraftfahrzeuges immer in einer gleichen Drehrichtung angetrieben wird, was zu einer konstruktiven Vereinfachung und zu geringerem Verschleiß führt. Das Getriebe 1 weist aufgrund kleiner zur Änderung des Übersetzungsverhältnisses erforderlicher Stellkräfte einen hohen Gesamtwirkungsgrad auf.

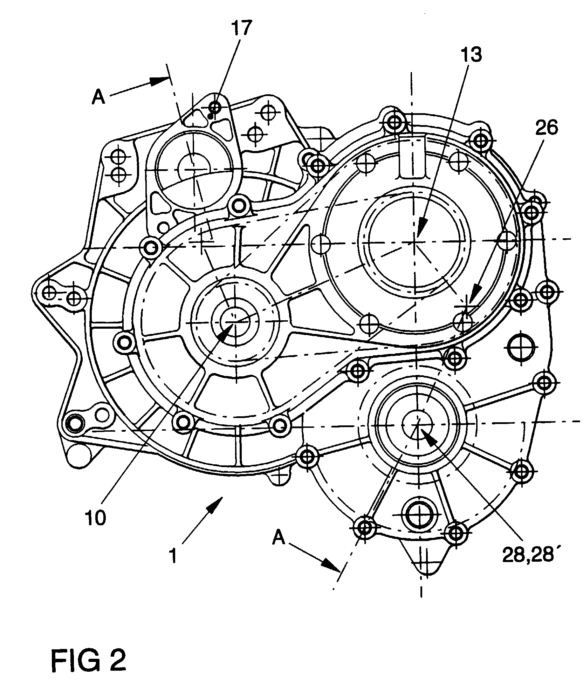

In der Figur 2 ist das Getriebe zur Verdeutlichung des in der Figur 1 dargestellten Schnittverlaufes in einer Seitenansicht dargestellt. Der Schnitt A-A beginnt oben im Bereich des Anlasserflansches 17 und verläuft über eine Achse der Variatorantriebswelle 10 zu einer Achse der Variatorabtriebswelle 13. Von dort aus führt der Schnitt über eine Achse der Getriebeabtriebswelle 26 linear zu einer gemeinsamen Achse der Halbwellen 28, 28' und weiter nach außen.

Durch eine entsprechende Faltung der in der Figur 1 dargestellten Schnittebene ergibt sich eine besonders kompakte und stabile Einheit des Getriebes 1.

### BEZUGSZEICHENLISTE

- 1: Getriebe
- 2: Variator
- 3: Anfahrkupplung
- 4: Umschaltgetriebe
- 5: Antriebsscheibenpaar
- 6: Abtriebsscheibenpaar
- 7: Zugmittel
- 8: antriebsseitige Festscheibe
- 9: antriebsseitige Losscheibe
- 10: Variatorantriebswelle
- 11: abtriebsseitige Festscheibe
- 12: abtriebsseitige Losscheibe
- 13: Variatorabtriebswelle
- 14: Variatorraum
- 15: Motorseite
- 16: Schwungscheibe
- 17: Anlasserflansch
- 18: Getriebeantriebswelle
- 19: Mitnehmerscheibe
- 20: Druckplatte
- 21: Gegendruckplatte
- 22: Kupplungsgehäuse
- 23: Anpreßfeder
- 24: Kupplungsstellglied
- 25: Stoßstange
- 26: Getriebeabtriebswelle
- 27: Ausgleichsgetriebe
- 28: Halbwelle
- 28': Halbwelle
- 29: Abtriebsflansch
- 29': Abtriebsflansch

## Patentansprüche

1. Stufenlos verstellbares Getriebe, insbesondere für ein Kraftfahrzeug, mit einer Anfahrkupplung (3), einem Variator (2) und einem Umschaltgetriebe (4), wobei das Getriebe (1) mit einem Antriebsmotor in Verbindung steht und der Variator (2) als Reibgetriebe mit stufenlos verstellbarem Übersetzungsverhältnis ausgebildet ist, **dadurch gekennzeichnet**, daß die Anfahrkupplung (3) in Kraftflußrichtung nach dem Variator (2) und vor dem Umschaltgetriebe (4) angeordnet ist, und daß der Variator (2) fest mit dem Antriebsmotor gekoppelt ist.

2. Getriebe nach Anspruch 1, **dadurch gekennzeichnet**, daß der Variator (2) eine steuerbare Anpreßeinrichtung und eine Vorrichtung zur Übersetzungsverstellung aufweist, und daß die Anpreßeinrichtung und die Vorrichtung zur Übersetzungsverstellung unabhängig voneinander betreibbar ausgebildet und angeordnet sind.

3. Getriebe nach Anspruch 2, **dadurch gekennzeichnet**, daß die Anpreßeinrichtung im wesentlichen drehmoment- und / oder übersetzungsabhängig steuerbar, und daß die Vorrichtung zur Übersetzungsverstellung im wesentlichen drehzahlabhängig steuerbar ausgebildet ist.

4. Getriebe nach einem der Ansprüche 1 bis 3, **dadurch gekennzeichnet**, daß der Variator (2) als Kegelscheibenumschlingungsgetriebe ausgebildet ist, daß der Variator (2) ein Antriebsscheibenpaar (5), ein Abtriebsscheibenpaar (6) und ein mit diesen in Verbindung stehendes Zugmittel (7) aufweist, und daß diese Bauteile in einem geschlossenen Variatorraum (14) angeordnet sind.

5. Getriebe nach einem der Ansprüche 1 bis 4, **dadurch gekennzeichnet**, daß die Anfahrkupplung (3) automatisiert betätigbar ausgebildet ist, daß eine Kupplungsbetätigungsvorrichtung vorgesehen ist, und daß die Kupplungsbetätigungsvorrichtung im wesentlichen drehzahlabhängig steuerbar ausgebildet ist.

6. Getriebe nach einem der Ansprüche 1 bis 5, **dadurch gekennzeichnet**, daß die Anfahrkupplung (3) als Trockenkupplung ausgebildet ist.

7. Getriebe nach einem der Ansprüche 1 bis 6, **dadurch gekennzeichnet**, daß die Anfahrkupplung (3) als Naßkupplung ausgebildet ist.

8. Getriebe nach einem der Ansprüche 1 bis 7, **dadurch gekennzeichnet**, daß das Umschaltgetriebe (4) eine Vorwärts- und eine Rückwärtsschaltvorrichtung aufweist, und daß die Vorwärts- und die Rückwärtsschaltvorrichtung derart miteinander gekoppelt sind, daß jeweils nur eine der beiden Schaltvorrichtungen einrückbar ist.

9. Getriebe nach Anspruch 8, **dadurch gekennzeichnet**, daß die Vorwärts- und die Rückwärtsschaltvorrichtung getrennt voneinander betreibbar ausgebildet und angeordnet sind.

10. Getriebe nach Anspruch 9, **dadurch gekennzeichnet**, daß eine Fahrtsicherung vorgesehen ist.
